# EUROPÄISCHE PATENTANMELDUNG

(11) **EP 2 431 871 A1**
(43) Veröffentlichungstag der Anmeldung: **21.03.2012**
(21) Anmeldenummer: 11180262.5
(22) Anmeldetag: 06.09.2011
(51) Int. Cl.: G06F 9/44

(54) **Führungs- und Waffeneinsatzsystem zur Unterstützung militärischer Führungsprozesse**

(30) Priorität: 21.09.2010 DE 102010046200
(71) Anmelder: ATLAS Elektronik GmbH, 28309 Bremen (DE)
(72) Erfinder: Hackmann, Volker, 28879 Grasberg (DE)
(74) Vertreter: Wasiljeff, Johannes M.B.

(57) **Zusammenfassung**

Die Erfindung betrifft ein Führungs- und Waffeneinsatzsystem (FüWES) zur Unterstützung militärischer Führungsprozesse, welches Schnittstellen zu mindestens einem Sensor und mindestens einem Effektor aufweist. Ferner ist das FüWES über wenigstens eine graphische Bedienoberfläche 2 steuerbar, wobei die Bedienoberfläche 2 zur wechselseitigen Kommunikation eines Benutzers mit dem FüWES auf wenigstens einem Anzeigemittel darstellbar ist. Zum einfachen Konfigurieren des FüWES bzw. zum Wiederverwenden einzelner Applikationen wird die graphische Bedienoberfläche 2 in einzelne Fragmente 8 zerlegt. Diese werden in einen Desktop-Manager 4 integriert, welcher die Prozesskontrolle des FüWES übernimmt. Zur Integration weisen die Fragmente 8 eine einheitliche Desktop-Schnittstelle 10 auf. Zur Kommunikation über eine Zwischenanwendung 22 mit den Sensoren und/oder Effektoren weisen die Fragmente 8 ferner eine Benutzer-Schnittstelle 12 auf.

Ferner betrifft die Erfindung ein Verfahren zum Konfigurieren eines Führungs- und Waffeneinsatzsystems.

## Beschreibung

Die Erfindung betrifft ein Führungs- und Waffeneinsatzsystem zur Unterstützung militärischer Führungsprozesse, welches Schnittstellen zu mindestens einem Sensor und mindestens einem Effektor aufweist sowie über eine graphische Bedienoberfläche der im Oberbegriff des Anspruchs 1 genannten Art verfügt und ein Verfahren zum Konfigurieren eines Führungs- und Waffeneinsatzsystems gemäß dem Oberbegriff von Anspruch 11.

Führungs- und Waffeneinsatzsysteme (FüWES) sind komplexe Systeme, mittels derer der taktische und operative Einsatz durchgeführt wird. Entsprechend ihrer operativen Fähigkeiten werden derartige Systeme im Rahmen von Operationen, Einsätzen, Übungen, Manövern etc. genutzt und umfassen üblicherweise Echtzeitanteile sowie Planungs- und Führungshilfen. Bekannt sind derartige FüWES bspw. aus der Wehrtechnik.

Zur Unterstützung militärischer Führungsprozesse weist das FüWES ein Steuerungsprogramm auf, mit dem Effektoren ansteuerbar und/oder Messergebnisse angeschlossener Sensoren, insbesondere Radar und/oder Sonar, auswertbar und interpretierbar und/oder Daten mit wenigstens einem weiteren Kommunikationsteilnehmer des Systems austauschbar sind.

Die Erfüllung derartiger Aufgaben erfordert unter anderem eine graphische Bedienoberfläche zur interaktiven, echtzeitfähigen Darstellung auf einem Anzeigemittel, insbesondere einer Bedienkonsole, für einen das FüWES zu bedienenden Benutzers. Ferner benötigt das FüWES individuelle, zum Teil echtzeitfähige Schnittstellen zu Sensoren, Effektoren und Kommunikationssystemen, dessen Zusammenstellung, bspw. für ein Marine-System, jedoch stark von Schiff zu Schiff und somit von Projekt zu Projekt differiert.

Üblicherweise verfügt die Marine über verschiedene Wasserfahrzeuge, welche unterschiedliche Sensoren und Effektoren aufweisen. An Bord derartiger Wasserfahrzeuge befinden sich mehrere Bedienkonsolen, an denen zugehörige Bediener ihnen zugeteilte Rollen übernehmen. Diese Rollen können jedoch in Abhängigkeit verschiedener Einsätze des Wasserfahrzeugs variieren. So bedarf bspw. eine Übungssimulation oder Gefechtssimulation eine andere Rollenverteilung an den Bedienkonsolen als z.B. eine Aufklärungsfahrt des Wasserfahrzeugs.

Die Bedienkonsole weist zur wechselseitigen Kommunikation des Bedieners mit dem FüWES eine graphische Bedienoberfläche auf. Wechselnde Einsatzszenarien der Wasserfahrzeuge erfordern auch wechselnde Rollen der Bediener an den Bedienkonsolen. Herkömmlicherweise wird diese Bedienoberfläche unter erheblichen Programmieraufwand für jedes Projekt neu programmiert. Eine Darstellung aller denkbaren Rollen in der graphischen Bedienoberfläche erschwert jedoch nachteilig die Bedienung und führt zu erheblicher Unübersichtlichkeit.

Da die Sensoren und Effektoren von verschiedenen Herstellern beschafft werden und auch die Wasserfahrzeuge als solche von wiederum anderen Herstellern bezogen werden, entstehen üblicherweise für jedes Schiff spezielle graphische Bedienoberflächen zur Steuerung des FüWES, die an die Geräte des Schiffes angepasst sind. Herkömmlicherweise wird diese Bedienoberfläche unter erheblichen Programmieraufwand für jeden Schiffstyp bzw. jede funktionelle Ausgestaltung des Schiffes neu programmiert.

Der Stand der Technik für die Integration von verschiedenen Sensoren und Effektoren in das FüWES ist definiert durch projektgetriebene Erstellung von Schnittstellenkopplungen zwischen den zu integrierenden Systemen.

In DE 197 41 959 A1 ist ein verteiltes Datenverarbeitungssystem gezeigt, welches durch einen zentralen Steuerungsbaustein gesteuert wird. Dazu sind in dem Steuerungsbaustein erste Mittel hinterlegt, welche technische Zustände in einem technischen Prozess kennzeichnen. Ferner sind zweite Mittel hinterlegt, womit den ersten Mitteln Controllerbausteine zugeordnet werden. Darüber hinaus weist der Steuerungsbaustein dritte Mittel auf, die ein Datenobjekt freigeben, wenn der durch das erste Mittel und das Datenobjekt kennzeichnende technische Zustand übereinstimmt, und vierte Mittel, die nach Freigabe eines Datenobjekts den Controllerbaustein aktivieren, welcher dem kennzeichnenden technischen Zustand entspricht.

Der Erfindung liegt nach alledem das Problem zugrunde, ein Führungs- und Waffeneinsatzsystem zu schaffen, welches wenigstens eine graphische Bedienoberfläche zum schnellen und kostengünstigen Erstellen eines derartigen Führungs- und Waffeneinsatzsystems aufweist, wodurch eine schnelle Anpassung bzw. Konfiguration des Systems an wechselnde Rollen und/oder Einsatzszenarien ermöglicht wird.

Die Erfindung löst dieses Problem durch ein Führungs- und Waffeneinsatzsystem mit den Merkmalen des Anspruchs 1 sowie durch die Merkmale eines entsprechenden Verfahrens zum Konfigurieren eines Führungs- und Waffeneinsatzsystems gemäß Anspruch 11.

Ein Führungs- und Waffeneinsatzsystem (FüWES) zur Unterstützung militärischer Führungsprozesse weist demnach Schnittstellen zu mindestens einem Sensor und mindestens einem Effektor auf. Ferner ist ein derartiges FüWES über eine graphische Bedienoberfläche steuerbar, wobei die Bedienoberfläche zur wechselseitigen Kommunikation wenigstens eines Benutzers mit dem FüWES auf wenigstens einem Anzeigemittel, insbesondere einer Bedienkonsole, darstellbar ist.

Graphische Bedienoberflächen erfüllen zum einen die Funktion, das Elemente und Informationen auf einem Bildschirm angezeigt werden. Zum anderen müssen sie die Ausführung von Aktionen ermöglichen, welche von dem Bediener an der Bedienoberfläche initiiert werden.

Als Basis für die graphische Bedienoberfläche dient ein Desktop-Manager, welcher die Prozesskontrolle des FüWES übernimmt. In diesem Desktop-Manager können eine Mehrzahl von Fragmenten während der Laufzeit des FüWES in den Desktop-Manager eingebunden werden, wodurch vorteilhaft ein modularer Aufbau der graphischen Bedienoberfläche entsteht. Dazu weisen die Fragmente jeweils eine Desktop-Schnittstelle auf, über die der Desktop-Manager die Fragmente stimuliert und verwaltet. Zur Kommunikation zwischen dem Fragment und mindestens einem Server weisen die Fragmente ferner jeweils eine Benutzer-Schnittstelle auf.

Über einen Dialogalgorithmus der eingebundenen Fragmente übernimmt der Desktop-Manager dann vorteilhaft die Ablaufkontrolle bzw. die Prozesskontrolle des FüWES.

Bei den Fragmenten handelt es sich um einzelne Module, die standardisierte Komponenten aufweisen und über Anwendungslogik für bestimmte Systemaspekte verfügen. Ferner dienen die Fragmente dazu, Schnittstellen zu standardisieren sowie Verfahren zu generalisieren, damit einzelne Applikationen dem Benutzer einheitlich erscheinen.

Durch den modularen Aufbau der Bedienoberfläche des FüWES entsteht der Vorteil, verschiedene Sensoren und Effektoren je nach Bedarf und Kundenwunsch kostengünstig und mit geringem Aufwand zusammenzufassen. Die Darstellung von Bedienelementen und die Steuerung von Funktionen miteinander vernetzter Systeme sind erfindungsgemäß so gestaltet, dass die Bedienung auch nachträglich hinzukommender Komponenten auf einfache Weise ermöglicht wird.

In einer bevorzugten Ausführungsform der Erfindung sind die Desktop-Schnittstellen der Fragmente alle einheitlich ausgebildet. Dadurch werden die Fragmente alle auf dieselbe Art und Weise vom Desktop-Manager stimuliert und zwar unabhängig davon, welchen Teil der Bedienoberfläche sie implementieren. Dadurch lassen sich die Fragmente mittels Online-Konfiguration bzw. mittels sog. "Drag and Drop" in den Desktop-Manager einbinden und werden von diesem automatisch erkannt und in dem Ablauf integriert.

In einer weiteren bevorzugten Ausführungsform der Erfindung sind die Benutzer-Schnittstellen der Fragmente derart ausgebildet, dass die Fragmente austauschbare Adapter für verschiedene Server darstellen.

Als Server wird hier ein Programm verstanden, das mit einem anderen Programm kommuniziert, um ihm Zugang zu speziellen Dienstleistungen zu verschaffen. Derartige anwendungsneutrale Programme, nachfolgend als Zwischenanwendungen (Middleware) bezeichnet, vermitteln derart zwischen Anwendungen, dass die Komplexität dieser Anwendung und ihre Infrastruktur verborgen bleiben. Die Zwischenanwendung stellt über die Laufzeitumgebung sog. Dienste zur Verfügung, auf die mittels spezieller Programmierschnittstellen zugegriffen werden kann. Durch die Zwischenanwendung wird das logische Muster der Interaktion zwischen Partnern und verteilten Systemen definiert, so dass die ursprüngliche Infrastruktur der Anwendung selbst verborgen bleibt. Sie ermöglicht somit die Kommunikation zwischen ansonsten entkoppelten Softwarekomponenten.

Die Zwischenanwendungs-Software ist als Standardsoftware von mehreren Herstellern verfügbar. Über die Benutzer-Schnittstellen der Fragmente wird eine Abstraktion von der Zwischenanwendung erreicht, wodurch vorteilhaft eine große Flexibilisierung in der Zusammenstellung der Systemkomponenten des FüWES erlangt wird.

Gemäß einer weiteren Ausführungsform der Erfindung weist das FüWES eine Bibliothek auf, in der eine Mehrzahl Musterlösungen ablegbar sind. Dabei bilden ein oder mehrere Fragmente eine derartige Musterlösung, welche auch vorgibt, wie die Schnittstellen der Fragmente untereinander kommunizieren und welche als wiederverwendbare Vorlage vorteilhafterweise in der Bibliothek zu finden ist.

Die Bibliothek gibt bei der Konfiguration des FüWES vorteilhaft einen schnellen Überblick über bereits vorhandene Musterlösungen, die die gewünschte Funktionalität liefern.

In einer weiteren Ausführungsform der Erfindung sind die Fragmente derart ausgebildet, dass sie die Layout-Informationen zur Darstellung ihrer speziellen Aufgabe über die graphische Bedienoberfläche auf dem Anzeigemittel aufweisen. Dadurch haben einzelne Applikationen des FüWES ein einheitliches Erscheinungsbild. Das ermöglicht einem Bediener sich leichter auf wechselnden Systemen und/oder Rollen und/oder Einsatzszenarien bei der Bedienung des FüWES zurechtzufinden.

In einer weiteren bevorzugten Ausführungsform der Erfindung sind die Fragmente derart ausgebildet, dass sie Logikelemente und Schnittstellen aufweisen, um eine in sich geschlossene Einheit zu bilden. Ferner stellen die Fragmente einen funktional abgeschlossenen Bedienaspekt dar. Das hat den Vorteil, dass die einzelnen Fragmente separat getestet und abgenommen werden können.

Gemäß einer weiteren Ausführungsform der Erfindung weisen die vom Desktop-Manager verwalteten Fragmente mindestens ein Bedienelement auf, welches zur Steuerung des FüWES benötigt wird. Vorzugsweise handelt es sich jedoch um die Bedienelemente "OK", "Apply", "Cancel" und/oder "Reset". Da der Desktop-Manager mit den Fragmenten die Basis der graphischen Bedienoberfläche darstellt, wird somit vorteilhafterweise ein einheitliches Erscheinungsbild der graphischen Bedienoberfläche erreicht.

In einer weiteren Ausführungsform der Erfindung ist der Desktop-Manager derart ausgebildet, dass er die integrierten Fragmente verwalten und stimulieren kann. Somit kann der Desktop-Manager vorteilhaft die Ablaufkontrolle des FüWES übernehmen.

Gemäß einer weiteren vorteilhaften Ausführungsform der Erfindung ist der Desktop-Manager derart ausgebildet, dass er an das als Server verwendete anwendungsneutrale Programm anschließbar ist. Vorzugsweise handelt es sich bei dem anwendungsneutralen Programm um die sog. Zwischenanwendung. Dadurch ist die Applikation von außen steuerbar und in der Lage über die Zwischenanwendung mit den in das System integrierten Geräten zu kommunizieren.

Bei einem entsprechendem Verfahren zum Konfigurieren des FüWES über wenigstens eine graphische Bedienoberfläche wird wenigstens ein neuer Desktop-Manager erstellt und/oder wenigstens ein bereits vorhandener Desktop-Manager ausgewählt. Dieser Desktop-Manager stellt die Basis für die graphische Bedienoberfläche dar und wird einem zu verwendenden Server angeschlossen. Anschließend wird wenigstens ein Fragment, welches über einen Dialogalgorithmus verfügt, zum Konstruieren der graphischen Bedienoberfläche in den Desktop-Manager eingebunden, wobei die Fragmente während der Laufzeit des FüWES in den Desktop-Manager integriert werden können. Von Vorteil ist dabei, dass eine hohe Flexibilisierung der graphischen Bedienoberfläche erreicht wird. Die Anpassung bzw. neue Zusammenstellung der graphischen Bedienoberfläche ist bspw. im Wartungs-Betrieb zur Laufzeit möglich.

Die eingebundenen bzw. integrierten Fragmente werden vom Desktop-Manager verwaltet und über eine Desktop-Schnittstelle stimuliert. Somit wird die Prozesskontrolle des FüWES mittels des Desktop-Managers unter Verwendung der eingebundenen Fragmente mit ihren Dialogalgorithmus übernommen.

Durch ein derartiges Verfahren zum Konfigurieren des FüWES entsteht die Möglichkeit, die Bedienoberfläche an wechselnde Rollen bzw. Einsatzszenarien anpassen zu können. Dies ist vorteilhaft, da die Rollenverteilung an Bord eines Wasserfahrzeugs üblicherweise nicht statischen Charakter aufweist. Ferner wird durch den Wegfall monolithischer Strukturen bei der Konfiguration derartiger FüWES eine Reduzierung der Komplexität erreicht.

In einer weiteren Ausführungsform der Erfindung wird der Ablauf des FüWES mittels einer funktionalen Darstellung über die graphische Bedienoberfläche auf dem Anzeigemittel ausgegeben. Da diese Darstellung in Echtzeit aktualisierbar ist, können vorteilhafterweise zeitnahe Reaktionen eines Bedieners erfolgen.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:
- Fig. 1: einen schematischen Aufbau der graphischen Bedienoberfläche und
- Fig. 2: einen schematischen Aufbau des Desktop-Managers.

Das nachfolgend erläuterte Ausführungsbeispiel der Erfindung betrifft ein Führungs- und Waffeneinsatzsystem (FüWES) der Marine. Die Erfindung ist jedoch nicht auf derartige FüWES der Marine beschränkt, sondern ist auch bspw. in der Luftwaffe oder beim Heer anwendbar.

Ein wichtiger Aspekt der Erfindung ist die Wiederverwendbarkeit und die einfache Konfigurierbarkeit der zu entwickelnden Software eines FüWES. Dazu ist die graphische Bedienoberfläche zur Steuerung des FüWES in einzelne Fragmente zerlegt und wird auf einem Anzeigemittel, insbesondere einer Bedienkonsole, einem Bediener des FüWES angezeigt.

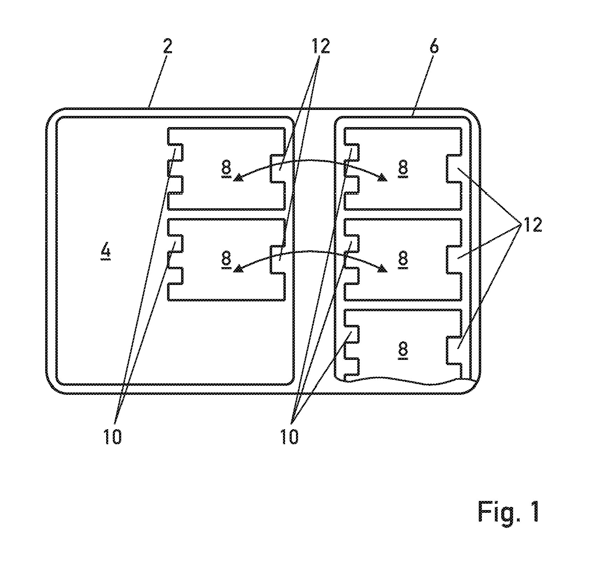

Fig. 1 zeigt einen schematischen Aufbau einer derartigen graphischen Bedienoberfläche 2. Zum Konstruieren dieser Bedienoberfläche 2 wird ein Desktop-Manager 4 und evtl. eine Bibliothek 6 benötigt.

In den Desktop-Manager 6 werden einzelne Fragmente 8 zum Konstruieren der graphischen Bedienoberfläche 2 integriert. Diese Fragmente 8 decken einen funktionalen Aspekt der Bedienung eines an das FüWES angeschlossenen Gerätes oder eines Systemkontexts ab.

Ein an das FüWES angeschlossene Gerät ist bspw. ein Sensor oder ein Effektor.

Die Fragmente 8 können entweder neu programmiert werden oder aus der Bibliothek 6 entnommen werden. In der Bibliothek 6 befindet sich eine Liste aller verfügbaren Musterlösungen. Durch das Auswählen einer Musterlösung werden die zugehörigen Fragmente 8 bzw. das Fragment 8 in den Desktop-Manager 4 integriert.

Zum Integrieren der Fragmente 8 in den Desktop-Manager 4 weisen die Fragmente 8 eine einheitliche Desktop-Schnittstelle 10 auf und fügen sich so in einen generischen Ablaufrahmen der gesamten Applikation des FüWES ein. Alle Fragmente 8 werden über diese Desktop-Schnittstelle 10 auf dieselbe Art und Weise stimuliert, und zwar unabhängig davon, welchen Teil der Bedienoberfläche 2 sie implementieren. Daher können Sie nach dem "Plug and Play"-Prinzip in den Desktop-Manager 4 integriert werden und werden von diesem automatisch erkannt und in dessen Verwaltung aufgenommen, ohne dass das gesamte System angepasst werden muss. Dadurch ist eine Reaktion auf Kundenwünsche durch flexibles, konfigurierbares Layout kostengünstig möglich. Entwicklungsseitig entsteht eine größere Produktivität bei der Erstellung von graphischen Bedienoberflächen 2.

Zum Kommunikationsaustausch zwischen dem Fragment 8 und mindestens einem Server bzw. Zwischenanwendung weisen die Fragmente 8 ferner eine individuelle Benutzer-Schnittstelle 12 auf.

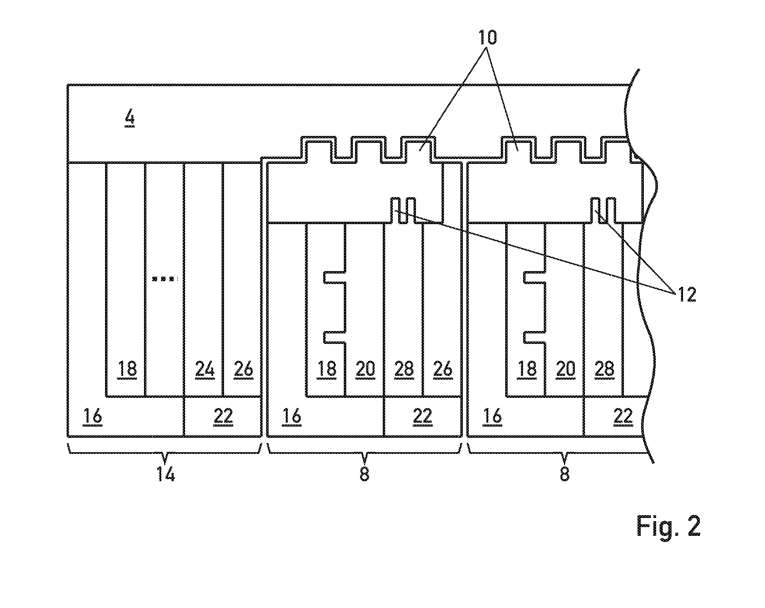

Fig. 2 zeigt einen schematischen Aufbau des Desktop-Managers 4, in den bereits ein Fragment 14 linksseitig integriert ist, gefolgt von zwei weiteren zu integrierenden Fragmenten 8.

Der Desktop-Manager 4 vermittelt eine Vereinheitlichung des graphischen Aufbaus aller Bedienoberflächen 2. Er liefert mit den Fragmenten neben den notwendigen Bedienelementen bzw. Schaltflächen wie bspw. "OK", "Apply", "Cancel" und/oder "Reset" sämtliche zur Steuerung des generischen Dialogalgorithmus notwendige Infrastruktur und dient als Container für die Fragmente 8, indem er diese verwaltet und über die Desktop-Schnittstelle 10 stimuliert. Unter Verwendung der integrierten Fragmente mit ihrem generischen Dialogalgorithmus übernimmt der Desktop-Manager 4 die Prozess- bzw. Ablaufkontrolle des FüWES.

Zum Konfigurieren des FüWES lassen sich die Fragmente 8 ohne Programmieraufwand projektspezifisch zusammenstellen und in den Desktop-Manager 4 integrieren.

Unter einer Konfiguration wird dabei sowohl das Neu-Konfigurieren eines FüWES als auch das Um-Konfigurieren eines bereits bestehenden FüWES verstanden.

Die Fragmente 8 weisen einen einheitlichen Komponenten-Aufbau auf und werden mittels einer bereits bekannten Programmiersprache 16 erstellt. Dabei sollten die Komponenten möglichst derart entworfen werden, dass sie mit anderen Komponenten verknüpft werden können und dann automatisch spielen, ohne das eine weitere Programmierung erforderlich ist.

Die Komponenten können Layout-Informationen, wie bspw. ein optischer Rahmen mit Beschriftungen zum optischen Strukturieren des Fragments 8 und/oder Eingabekomponenten und/oder Ausgabekomponenten sein. Die Fragmente 8 beinhalten zudem die Implementierung der Benutzer-Schnittstellenanwendung 12 zu dem jeweiligen, der entsprechenden Aufgabe des Fragmentes 8 zugehörigen Gerät. Somit implementiert ein Fragment 8 einen funktional abgeschlossenen Bedienaspekt, welcher von beliebiger Granularität sein kann. Daher handelt es sich bei den Fragmenten 8 um Einheiten, die mit geringem Integrationsaufwand auch in anderen Desktop-Managern 4 wieder verwendet werden können. Ferner können diese Fragmente 8 separat getestet und abgenommen werden.

Jedes Fragment 8, welches die Eingabe von Daten ermöglicht, ist selber für die Überprüfung der Daten zuständig. Die Datenüberprüfung wird somit nur einmal durch den Entwickler implementiert. Dadurch wird das Verhalten des Fragmentes 8 bei Falscheingaben standardisiert. Die Implementierung dieser Datenüberprüfung erfolgt in einer Basiskomponente 18, welche zunächst eine visuelle Komponente darstellt, die zur Ein- bzw. Ausgabe von Daten dient.

Ferner weisen die Fragmente 8 eine Konverterkomponente 20 auf, zum Konvertieren technischer Einheiten.

Vorraussetzung für die Erstellung einer neuen Applikation des FüWES ist die Anbindung an die Zwischenanwendung 22. Dadurch ist die Applikation von außen steuerbar. Die Möglichkeit der Fernsteuerung wird bspw. durch die Verwendung zweier sog. "Plug and Play"-Komponenten in den Fragmenten 8 erreicht, welche die Applikation nach außen repräsentieren. Bei diesen Komponenten handelt es sich zum einen um eine Service-Komponente 24, um die Applikation bei der Zwischenanwendung 22 bekannt zu machen, und zum anderen um eine Display-Komponente 26 zum Steuern der Sichtbarkeit, Auswählbarkeit und Position.

Ein Fragment 8 deckt inhaltlich einen Serveraspekt ab und versieht eine definierte Serverfunktionalität mit einer Benutzer-Schnittstelle 12 in einer individuellen Schnittstellenkomponente.

Das Fragment 8 wird durch den Desktop-Manager 4, in den er integriert ist, stimuliert, sobald ein Benutzer einen der Standardbuttons gedrückt hat, und muss in sinnvoller Weise auf diese Stimulation reagieren. Somit stellen die Fragmente 8 austauschbare Adapter für verschiedene Zwischenanwendungen 22 dar. Die Benutzer-Schnittstellen 12 der Fragmente 8 zur Zwischenanwendung 22 sind über die Schnittstellenkomponente 28 gekapselt, um die Zwischenanwendung 22 ggf. ersetzen zu können. Durch das Verbergen der Komplexität der eingesetzten Zwischenanwendung 22 wird der Schulungsaufwand für Mitarbeiter reduziert.

Die Integration der Fragmente 8 in den Desktop-Manager 4 erfolgt je nach Anforderung an die graphische Bedienoberfläche 2. Die eingangs erwähnte Rollenverteilung an Bord eines Wasserfahrzeugs erfordert evtl. angepasste graphische Bedienoberflächen 2. Da das Aufprägen eines bestimmten Rollenverhaltens einer Applikation eine Funktionalität der zu verwendeten Zwischenanwendung 22 ist, verfügen die Fragmente 8 über die Display-Komponente 26, die eine Verhaltenssteuerung von außen implementiert. Die Bedienelemente des Desktop-Managers 4 lassen sich somit abhängig von der eingestellten Rolle in ihrer Sensitivität steuern.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Führungs- und Waffeneinsatzsystem zur Unterstützung militärischer Führungsprozesse, welches Schnittstellen zu mindestens einem Sensor und mindestens einem Effektor aufweist und über wenigstens eine graphische Bedienoberfläche (2) steuerbar ist, wobei die Bedienoberfläche (2) zur wechselseitigen Kommunikation eines Benutzers mit dem Führungs- und Waffeneinsatzsystem auf wenigstens einem Anzeigemittel darstellbar ist, **gekennzeichnet durch**
wenigstens einen Desktop-Manager (4), welcher derart ausgebildet ist, um als Basis für die graphische Bedienoberfläche (2) zu dienen,
eine Mehrzahl von Fragmenten (8) zur Konstruktion der graphischen Bedienoberfläche (2), wobei die Fragmente (8) über einen Dialogalgorithmus verfügen und in den Desktop-Manager (4) eingebunden werden,
eine Desktop-Schnittstelle (10), die derart ausgebildet ist, um das Fragment (8) in den Desktop-Manager (4) einzubinden, wobei die Fragmente (8) während der Laufzeit des Führungs- und Waffeneinsatzsystems in den Desktop-Manager (4) integrierbar sind,
eine weitere Ausgestaltung der Fragmente (8) mit jeweils einer Benutzer-Schnittstelle (12), die derart ausgebildet ist, um eine Kommunikation zwischen dem Fragment (8) und mindestens einem Server (22) zu ermöglichen,
eine Ausgestaltung des Desktop-Managers (4) derart, um die über die Desktop-Schnittstelle (10) in den Desktop-Manager (4) eingebundenen bzw. integrierten Fragmente (8) zu verwalten und über die Desktop-Schnittstelle (10) zu stimulieren und
eine weitere Ausgestaltung des Desktop-Managers (4) derart, um unter Verwendung der eingebundenen Fragmente (8) mit ihrem Dialogalgorithmus die Prozesskontrolle des Führungs- und Waffeneinsatzsystems zu übernehmen.

2. Führungs- und Waffeneinsatzsystem nach Anspruch 1,
**dadurch gekennzeichnet, dass**
die Desktop-Schnittstellen (10) der Fragmente (8) alle einheitlich ausgebildet sind.

3. Führungs- und Waffeneinsatzsystem nach Anspruch 1 oder 2,
**dadurch gekennzeichnet, dass**
die Benutzer-Schnittstellen (12) der Fragmente (8) derart ausgebildet sind, dass die Fragmente (8) austauschbare Adapter für verschiedene Server (22) darstellen.

4. Führungs- und Waffeneinsatzsystem nach einem der vorhergehenden Ansprüche,
**gekennzeichnet durch**
eine derartige Ausbildung des mindestens einen Servers (22) als anwendungsneutrales Programm, insbesondere Zwischenanwendung, zum Datenaustausch zwischen den Fragmenten (8) und zugehörigen Sensoren und/oder Effektoren.

5. Führungs- und Waffeneinsatzsystem nach einem der vorhergehenden Ansprüche,
**gekennzeichnet durch**
eine Bibliothek (6) in der eine Mehrzahl Musterlösungen ablegbar sind, wobei ein oder mehrere Fragmente (8) eine Musterlösung bilden.

6. Führungs- und Waffeneinsatzsystem nach einem der vorhergehenden Ansprüche,
**dadurch gekennzeichnet, dass**
die Fragmente (8) derart ausgebildet sind, dass sie die Layout-Informationen zur Darstellung ihrer speziellen Aufgabe über die graphische Bedienoberfläche (2) auf dem Anzeigemittel aufweisen.

7. Führungs- und Waffeneinsatzsystem nach einem der vorhergehenden Ansprüche,
**dadurch gekennzeichnet, dass**
die Fragmente (8) derart ausgebildet sind, dass sie Logikelemente und Schnittstellen innehaben, um eine in sich geschlossene Einheit zu bilden und einen funktional abgeschlossenen Bedienaspekt bereitzustellen.

8. Führungs- und Waffeneinsatzsystem nach einem der vorhergehenden Ansprüche,
**gekennzeichnet durch**
Bedienelemente der vom Desktop-Manager (4) verwalteten Fragmente (8), welche zur Steuerung des Führungs- und Waffeneinsatzsystems notwendig sind.

9. Führungs- und Waffeneinsatzsystem nach einem der vorhergehenden Ansprüche,
**dadurch gekennzeichnet, dass**
der Desktop-Manager (4) derart ausgebildet ist, um die integrierten Fragmente (8) zu verwalten und zu stimulieren.

10. Führungs- und Waffeneinsatzsystem nach einem der vorhergehenden Ansprüche,
**dadurch gekennzeichnet, dass**
der Desktop-Manager (4) derart ausgebildet ist, dass er an das als Server (22) verwendete anwendungsneutrale Programm, insbesondere eine Zwischenanwendung, anschließbar ist.

11. Verfahren zum Konfigurieren eines Führungs- und Waffeneinsatzsystems über wenigstens eine graphische Bedienoberfläche (2), wobei das Führungs- und Waffeneinsatzsystem Schnittstellen zu mindestens einem Sensor und mindestens einen Effektor aufweist und wobei die Bedienoberfläche (2) zur wechselseitigen Kommunikation eines Benutzers mit dem Führungs- und Waffeneinsatzsystems auf wenigstens einem Anzeigemittel darstellbar ist,
**dadurch gekennzeichnet, dass**
wenigstens ein neuer Desktop-Manager (4) erstellt wird und/oder wenigstens ein vorhandener Desktop-Manager (4) ausgewählt wird, wobei der Desktop-Manager (4) als Basis für die graphische Bedienoberfläche (2) dient,
der Desktop-Manager (4) an einen zu verwendenden Server (22), insbesondere eine Zwischenanwendung, angeschlossen wird,
mindestens ein Fragment (8), welches über einen Dialogalgorithmus verfügt, zum Konstruieren der graphischen Bedienoberfläche (2) in den Desktop-Manager (4) eingebunden wird, wobei die Fragmente (8) während der Laufzeit des Führungs- und Waffeneinsatzsystems in den Desktop-Manager (4) integriert werden können,
die eingebundenen bzw. integrierten Fragmente (8) vom Desktop-Manager (4) verwaltet und über eine Desktop-Schnittstelle (10) stimuliert werden und die Prozesskontrolle des Führungs- und Waffeneinsatzsystems mittels des Desktop-Managers (4) unter Verwendung der eingebundenen Fragmente (8) mit ihrem Dialogalgorithmus übernommen wird.

12. Verfahren nach Anspruch 11,
**dadurch gekennzeichnet, dass**
eine funktionale Darstellung des Ablaufes des Führungs- und Waffeneinsatzsystems über die graphische Bedienoberfläche (2) auf dem Anzeigemittel ausgegeben wird, wobei die Darstellung in Echtzeit aktualisierbar ist.
